# EUROPEAN PATENT SPECIFICATION

(11) **EP 1 151 728 B1**
(45) Date of publication and mention of the grant of the patent: **02.08.2006**
(21) Application number: 00109430.9
(22) Date of filing: 03.05.2000
(51) Int. Cl.: A61C 19/00, B01L 7/00

(54) **Method and heating assembly for preheating dental materials**
Verfahren und Erhitzungsgerät zur Vorwärmung von Dentalmaterialien
Procédé et dispositif de chauffage pour le préchauffage des matériaux dentaires

(43) Date of publication of application: 07.11.2001
(73) Proprietor: Friedman, Joshua, Dr., Danbury, CT 06810 (US)
(72) Inventor: Friedman, Joshua, Dr., Danbury, CT 06810 (US)
(74) Representative: Kinzebach, Werner

(56) References cited:
- EP-A- 0 826 420
- EP-A- 0 895 772
- DE-A- 1 909 857
- FR-A- 2 044 308

## Description

### FIELD OF THE INVENTION

This invention relates to a method and heating assembly for pre-heating dental material(s) prior to clinical usage and more particularly to a method and device for pre-heating compule(s) of dental material to an elevated temperature, above ambient, prior to clinical usage.

DE 1909857; EP 0 895 772 and EP 0 826 420 disclose heating assemblies.

### BACKGROUND OF INVENTION

In accordance with the present invention it has been discovered that many dental materials have properties which can be enhanced by being preheated just prior to clinical usage. Examples of such dental materials include etching agents, bleaching compositions, dental cements, impression materials and more particularly photocurable dental restorative materials. All such dental materials can be dispensed through a dispensing device such as a syringe. Presently, it has become conventional to package dental material(s) particularly dental restorative materials in unit dosage within a removable section hereafter called a "compule" of the dispensing device. The use of a dispenser facilitates the handling and discharge of the dental material(s) from the compule directly into the patient's mouth.

Photocurable dental restorative materials have become popular as a replacement for silver amalgams and have the advantage of matching the tooth color and being adjustable in the dental cavity for contour as well as shape before curing. Photocurable dental materials are composite compositions of unreactive monomer(s) and filler formulated to be polymerized by photochemical action upon exposure to light. In general photocurable restorative materials are typically formulated for dental usage as a paste and will polymerize upon the application of light in the 300-500 nanometer range. The concentration of filler in the composite is adjusted as high as possible to maximize strength, typically between 75-90% of the composition. The higher the filler concentration the more viscous and the more difficult the material is to dispense, handle and polymerize. Moreover, it is conventional for many dentists to refrigerate compules containing the photocurable dental restorative material prior to clinical use. The purpose of cold storage is to slow down the natural generation of free radicals within the material and thereby extend the useful life of the material. However, the viscosity of the composite is also subject to temperature and the colder the temperature the more viscous the material becomes. The ability of the photocurable material to flow and adapt to the intricacies of a dental cavity preparation will be compromised if sufficient time is not given to restore the temperature of the refrigerated composite back to room temperature.

### SUMMARY OF THE INVENTION

It has been discovered in accordance with the present invention that when compules of photocurable composite materials are pre-heated to an elevated temperature above ambient immediately prior to clinical usage the degree of conversion i.e., the percentage of unreacted monomer converted to polymer within the cavity preparation is substantially increased. In addition, by pre-heating the compules of photocurable composite materials its viscosity is substantially reduced permitting yet higher filler loading(s) in the composite material and enabling the restorative material expressed from the compule to adapt better to the walls of the cavity preparation and to the intricacies of the cavity preparation.

The principle advantages of preheating compules of photocurable material(s) prior to clinical usage are as follows:
(1) Improved monomer conversion,
(2) Improved material hardness,
(3) Improved wear resistance,
(4) Improved color stability, and
(5) Improved strength.

Some or all of the same advantages apply when preheating dental material other than photocurable restorative material(s) prior to clinical usage. For example heating a bleaching composition containing a peroxide bleaching agent will be more active at higher temperatures. Thus the performance of many dental material(s) heated prior to clinical usage will be improved and their application time decreased in accordance with the present invention.

The method of the present invention for enhancing the cure of photocurable dental restorative composite materials containing unreactive monomer(s) and filler upon exposure to light radiation broadly comprises the step of preheating the photocurable dental restorative composite(s) to an elevated temperature above ambient prior to said exposure to light radiation during clinical usage.

The heating assembly of the present invention for heating dental materials prior to clinical usage comprises a base, an upper section removably mounted on the base for supporting one or more compules containing photocurable dental restorative composite material(s), with the upper section being composed of a conductive material and with the base forming a housing for a thermostat, a power connection for electrically connecting the thermostat to a source of power and a heating element for uniformity heating said upper section to an elevated temperature preset by said thermostat for preheating said compules to said elevated temperature.

### BRIEF DESCRIPTION OF THE DRAWINGS

Other features and advantages of the present invention will become apparent from the following detailed description of the invention when read in conjunction with the accompanying drawings of which:
Figure 1 is a perspective view of the heater assembly of the present invention;
Figure 2 is a cross sectional view of the heater assembly of Figure 1,
Figure 3 is a top view of the heater assembly of Figure 1 with the cover removed,
Figure 4 is a graph showing the relationship between pre-cure temperature and percentage of monomer conversion into polymer;
Figure 5 is another graph showing the effect of different temperatures on the viscosity of a typical composite dental resin material before cure with viscosity differences shown by measuring the average thickness variation of the material at each temperature;
Figure 6 is yet another graph similar to Figure 5 which shows that the relationship of temperature and the viscosity (measured by thickness variation) of the pre-cured dental material is non-linear;
Figure 7 shows an alternative compule arrangement for the heater assembly of Figure 1; and
Figure 8 shows yet another alternative compule arrangement using small syringe compules with the heater assembly of the present invention.

### DETAILED DESCRIPTION OF THE PREFERRED EMBODIMENT

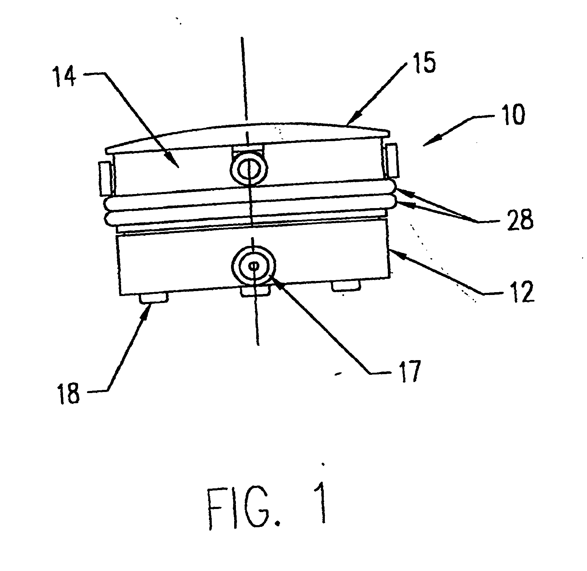

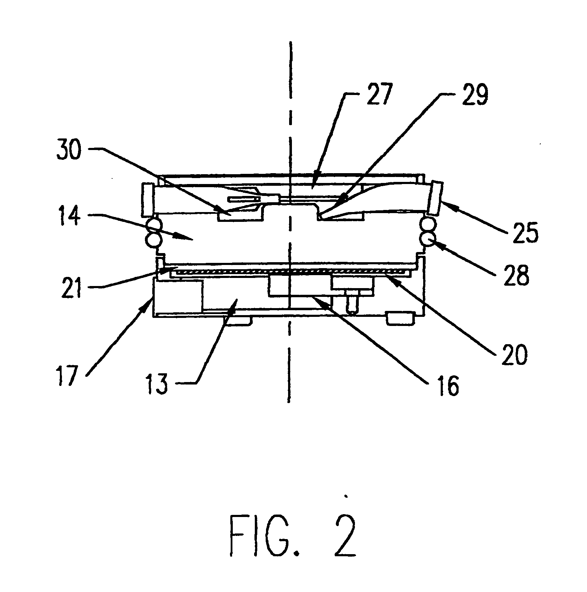

The preferred heater assembly 10 of the present invention is shown in Figures 1,2,3,7 and 8 and comprises a base 12 having a removable upper section 14 mounted on the base 12 and a removable cover 15. The heater assembly 10 may be of any suitable geometry and size. In the embodiment of Figure 1 the base 12 is cylindrical. The base 12 has a cavity 13 in which a thermostat 16 and a power connection 17 is mounted. The base 12 supports the removable upper section 14. The base 12 may be composed from any suitable material such as plastic or metal. The power connection 17 extends from the cavity 13 in the base 12 to the periphery 18 of the base 12 for electrically connecting the thermostat 16 to a suitable external source of electrical power (not shown). Although not shown the heater assembly 10 may also be operated from a rechargeable battery. The thermostat 16 may also be connected in circuit with a suitable visible light source (not shown) to provide a visual indication that the thermostat is operational and the unit has reached operating temperature.

The thermostat 16 is electrically connected to a heating element 20 to form an electrical resistive heater for heating the upper section 14 to a controlled temperature. The heating element 20 is a conductive material in the form of a filamentary wire or flat conductor of graphite, tungsten, copper or other suitable conductive material in a serpentine or other geometrical arrangement to form a series electrical path with the thermostat 16. The heating element 20 is embedded in a plastic, ceramic or rubber compound so as to form a flat surface which is connected to a conductive flat plate 21 upon which the upper section 14 rests. The flat plate 21 is removably affixed to the base 12 and provides a planar surface for uniformity heating the upper section 14 of the heating assembly 10. The thermostat 16 and heating element 20 are commercially available as a single unit. The thermostat 16 controls the temperature of the heating element 20. Any conventional type of thermostat may be used for this purpose and is preferably preadjusted to bring the temperature of the heating element 20 to a suitable elevated temperature above ambient room temperature but preferably between 100°F and 140°F. The optimum temperature setting of the heating element 20 is about 130°F for photocurable dental materials. It could be higher for bleaching or other dental materials applied to the enamel. Too high a temperature would cause dental pulp damage.

The removable upper section 14 of the heating assembly 10 is of a conductive material such as aluminum, copper, brass or stainless steel and rests upon the flat plate 21 which may be fabricated from a similar conductive material. One or more slots 22 is provided in the upper section 14 of the heater assembly 10 to support a corresponding number of compules 25 of photocurable restorative material. Once the upper section 14 is heated it serves as a heat sink upon its removal from the base 12 to maintain the compules at a relatively uniform temperature over an extended time period. In the embodiment of Figure 1 four compules 25 are shown symmetrically arranged in slots 22 positioned 90° apart from one another. The cover 15 is seated over the heater assembly 10 to substantially enclose the compules 25 within an enclosed space 27 to facilitate the heating of the compules 25. An insulating member 28, preferably rubber or plastic O-ring(s), surrounds the upper section 14 to enable the upper section 14 to be removed from the base 12 to a dental tray adjacent the patient at the elevated temperature to which the compules 25 have been raised.

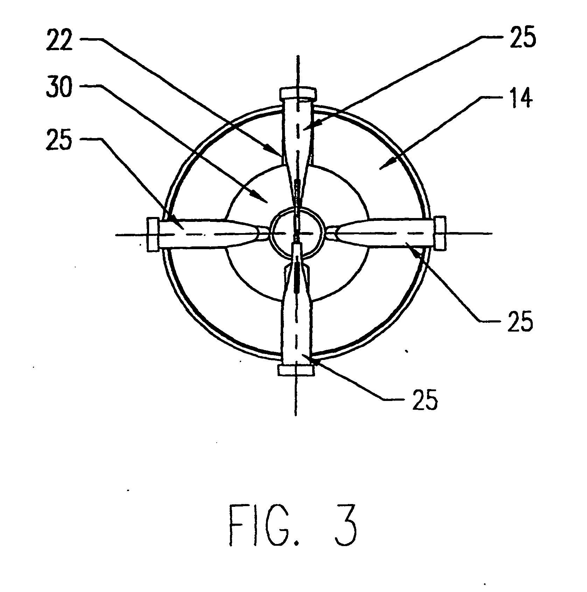

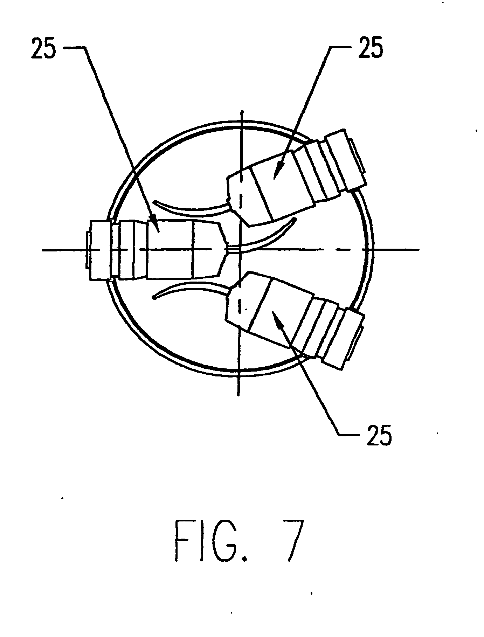

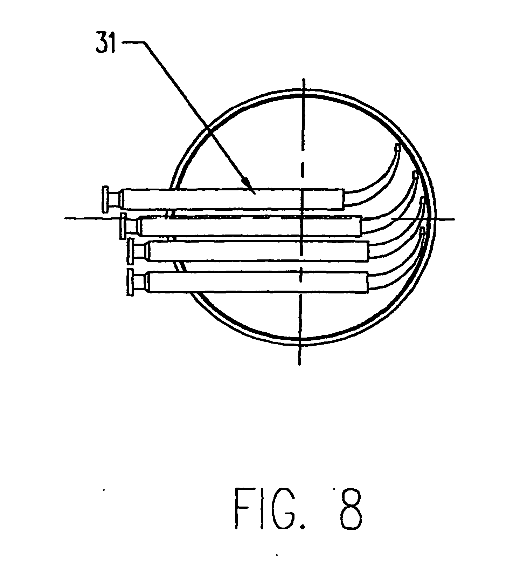

The design of the individual compules 25 does not form a part of the present invention. Different compule designs are available commercially for conventional use with different dispensers. The compules 25 are generally affixed to the end of the dispenser and have a contoured shape with an open ended tip 29 at the distal end thereof which lies at an appropriate angle from the central axis of the compule 25. Photocurable material is discharged into a dental cavity from the compules 25 as shown in Figure 3 and Figure 7 by attachment of each compule to a conventional dispensing syringe. Alternatively as shown in Figure 8 the heating assembly may be used to heat a combination compute syringe dispenser 31. Such combination compule syringe dispenser(s) 31 are presently commercially available. The upper section 14 of the heating assembly contains an annular channel 30 for receiving the tips 29 of the compules 25. Figures 7 and 8 show alternate arrangements to accommodate different compule/syringe designs.

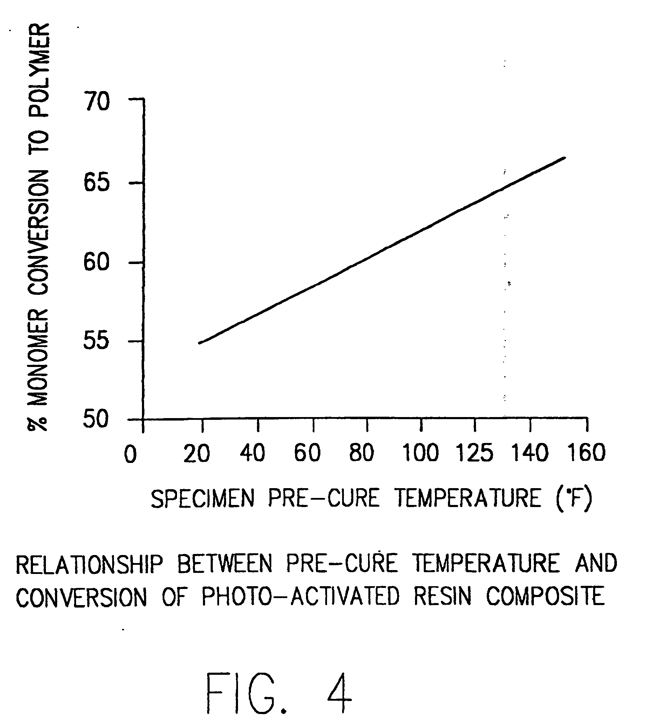

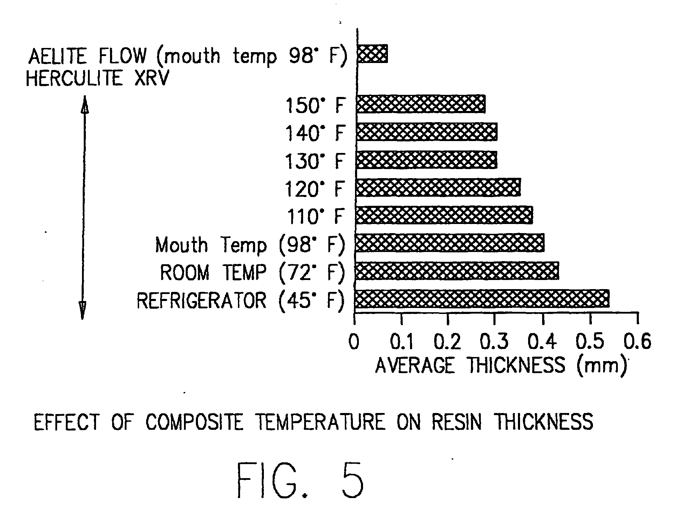

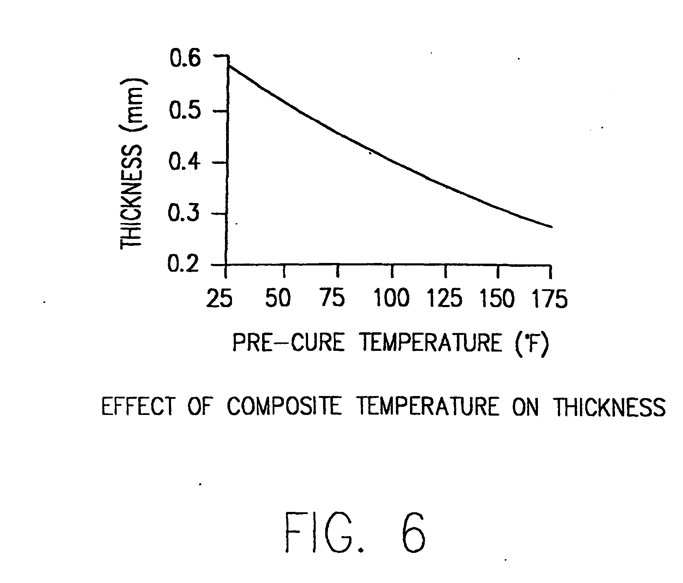

In accordance with the present invention it was discovered that the reactive monomer in the photocurable material converts to polymer in a substantially linear relationship over a temperature range extending from a refrigerated temperature of -6.6°C (20° F) to an elevated temperature of 65,6°C (150°F ). This was substantiated by the graphically presented data in Figure 4 using a commercially common photo-activated composite identified as Herculite XRV, shade A2, manufactured by Kerr/Sybron of Orange California. A small amount of material was expressed between two mylar strips and conditioned for a minimum of 30 minutes at selected pre-set temperature values. A conventional dental light curing unit was also placed in each temperature environment. While in this environment the test specimen was exposed to a controlled intensity (500mW/cm²) of curing light for 60 seconds. Following exposure the specimen was stored in the dark for 24 hours. The extent of monomer conversion was then determined by using an infrared spectrometer (FTIR) and standardized methods of statistical analysis. Figure 4 shows the relationship of monomer conversion to pre-cure temperature. Figures 5 and 6 show the effect of temperature on viscosity with viscosity measured by the thickness variation of the material, i.e., a less viscous material will have less thickness. Figures 5 and 6 validate the concept of the present invention that an increase in the temperature of photocurable materials above ambient temperature and particularly above 37,8°C (100° F) and optimally at 54,4°C (°130 F) prior to clinical usage unexpectedly enhances cure.

## Claims

1. A method for enhancing the cure of a photocurable dental restorative composite material containing unreacted monomer(s) and filler upon its exposure to light radiation comprising the steps of:
storing said dental restorative composite material in a container, and
preheating tne container housing said photocurable dental restoration composite material to raise the temperature of said dental restorative composite material to an elevated temperature above ambient prior to use.

2. A method as defined in claim 1 wherein said container housing said dental restorative composite material comprises a compule.

3. A method as defined in claim 1 or 2 wherein said compule is preheated to a preset temperature between about 37.8° C (100° F) to 60° C (140° F).

4. A method as defined in claim 3 wherein said compule is preheated to a preset temperature of about 54.4°C (130° F).

5. A heating assembly for preheating one or more dental compules containing dental material prior to clinical usage comprising a base (12) and an upper section (14) composed of a conductive material,
said upper section (14) being removably mounted on said base (12) and having one or more slots (22) to accommodate each of one or more of said dental compules (25), said upper section functioning as a heat sink for each of said compules (25) and being capable of maintaining said compules at a relatively uniform temperature over an extended perior of time,
said base (12) comprising a thermostat (16), a power connection(17) for electrically connecting the thermostat to a source of power, a heating element (20) for uniformly heating the base (12) and a conductive material (21) in engagement with said heating element (20) having a substantially planar surface upon which said removable upper section (14) rests to cause the temperature of the upper section (14) when mounted thereon to rise to an elevated temperature according to said thermostat (16) and to uniformly heat each compute (25)in each of said slots (22) and, in turn, the dental material in each compule (25) respectively to said elevated temperature.

6. A heating assembly as defined in claim 5 wherein said heating element (20) in said base is in the form of a filamentary wire or flat conductor connected to the thermostat (16) to form an electrical resistive heater.

7. A heating assembly as defined in any of claims 5 or 6 wherein said upper section (14) is composed of a material selected from the class consisting of aluminum, copper, brass and stainless steel.

8. A heating assembly as defined in any of claims 5 to 7 further comprising an insulating member (28) surrounding said upper section (14) which enables said upper section (14) to be removed from said base (12) even at said elevated temperature so that said compules (25) may be moved when necessary to a dental tray at said elevated temperature.

9. A heating assembly as defined in any of the claims 5 to 8 wherein each of said compules (25) is incorporated in a dispensing device as a single unit to be heated by said heating assembly.

10. A heating assembly as defined in claim 9 wherein said dispensing device is a syringe dispenser (31) of dental material.

## Patentansprüche

1. Verfahren zur Verbesserung der Aushärtung eines lichthärtenden Kompositmaterials für Dentalrestaurationen, welches unreagiertes Monomer (unreagierte Monomere) und Füllstoffe enthält, bei Bestrahlung mit Licht, mit den Schritten:
Aufbewahren des Kompositmaterials für Dentalrestaurationen in einem Behälter
und
Vorwärmen des Behälters, welcher das lichthärtende Kompositmaterial für Dentalrestaurationen enthält, um die Temperatur des Kompositmaterials für Dentalrestaurationen vor dessen Verwendung auf eine höhere Temperatur als die Umgebungstemperatur zu erhöhen

2. Verfahren gemäß Anspruch 1, wobei der Behälter, welcher das Kompositmaterial für Dentalrestaurationen enthält, eine Compule umfasst.

3. Verfahren gemäß Anspruch 1 oder 2, wobei die Compule auf eine vorgegebene Temperatur zwischen etwa 37,8° C (100° F) und 60° C (140° F) vorgewärmt wird.

4. Verfahren gemäß Anspruch 3, wobei die Compule auf eine vorgegebene Temperatur von etwa 54,4° C (130° F) vorgewärmt wird.

5. Heizeinrichtung zum Vorwärmen von einer oder mehreren Dentalmaterial enthaltenden Dentalcompulen vor dem klinischen Einsatz, mit einer Basis (12) und einem oberen Abschnitt (14), der aus einem leitfähigen Material besteht,
wobei der obere Abschnitt (14) abnehmbar auf der Basis (12) montiert ist und einen oder mehrere Schlitze (22) zur Aufnahme jeder der einen oder mehreren Dentalcompulen (25) aufweist, wobei der obere Abschnitt als Wärmesenke für jede der Compulen (25) dient und in der Lage ist, die Compulen über einen längeren Zeitraum auf einer relativ gleichmäßigen Temperatur zu halten,
wobei die Basis (12) einen Thermostaten (16), einen Stromanschluss (17) zur elektrischen Verbindung des Thermostaten mit einer Stromquelle, ein Heizelement (20) zur gleichmäßigen Erwärmung der Basis (12) und ein mit dem Heizelement (20) zusammenwirkendes leitfähiges Material (21) umfasst, welches eine im Wesentlichen ebene Oberfläche aufweist, auf welcher der abnehmbare obere Abschnitt (14) ruht, um die Temperatur des oberen Abschnitts (14), wenn dieser darauf montiert ist, gemäß der Vorgabe des Thermostaten (16) auf eine erhöhte Temperatur ansteigen zu lassen und jede Compule (25) in jedem der Schlitze (22) gleichmäßig zu erwärmen und folglich das Dentalmaterial in jeder Compule (25) jeweils auf die erhöhte Temperatur zu erwärmen.

6. Heizeinrichtung gemäß Anspruch 5, wobei das Heizelement (20) in der Basis in Form eines fadenartigen Drahtes oder eines Flachleiters ausgebildet ist, der zur Bildung einer elektrischen Widerstandsheizung mit dem Thermostat (16) verbunden ist.

7. Heizeinrichtung gemäß einem der Ansprüche 5 oder 6, wobei der obere Abschnitt (14) aus einem Material besteht, das ausgewählt ist aus der Gruppe bestehend aus Aluminium, Kupfer, Messing und Edelstahl.

8. Heizeinrichtung gemäß einem der Ansprüche 5 bis 7, welche außerdem ein dem oberen Abschnitt (14) umgebendes Isolierteil (28) umfasst, das es erlaubt, den oberen Abschnitt (14) sogar bei der erhöhten Temperatur von der Basis (12) abzunehmen, so dass die Compulen (25) bei Bedarf bei der erhöhten Temperatur zu einem Dentaltablett transportiert werden können.

9. Heizeinrichtung gemäß einem der Ansprüche 5 bis 8, wobei jede der Compulen (25) als einzelne Einheit in eine Abgabevorrichtung eingebaut ist, welche durch die Heizeinrichtung erwärmt werden kann.

10. Heizanordnung gemäß Anspruch 9, wobei die Abgabevorrichtung ein spritzenartiger Spender (31) von Dentalmaterial ist.

## Revendications

1. Procédé d'amélioration du durcissement d'un matériau composite photodurcissable pour réparation dentaire contenant une charge et un ou plusieurs monomères n'ayant pas réagi lors de son exposition au rayonnement lumineux, comprenant les étapes consistant à :
stocker ledit matériau composite pour réparation dentaire dans un conteneur,
et
préchauffer le conteneur renfermant ledit matériau composite photodurcissable pour réparation dentaire afin d'élever la température dudit matériau composite pour réparation dentaire à une température élevée supérieure à la température ambiante préalablement à son utilisation.

2. Procédé selon la revendication 1, dans lequel ledit conteneur renfermant ledit matériau composite pour réparation dentaire comprend une compule.

3. Procédé selon la revendication 1 ou 2, dans lequel ladite compule est préchauffée à une température prédéfinie comprise entre environ 37,8°C (100°F) et 60°C (140°F) .

4. Procédé selon la revendication 3, dans lequel ladite compule est préchauffée à une température prédéfinie d'environ 54,4°C (130°F).

5. Ensemble de chauffage permettant de préchauffer une ou plusieurs compules dentaires contenant un matériau dentaire préalablement à une utilisation clinique comprenant une base (12) et une section supérieure (14) se composant d'un matériau conducteur,
ladite section supérieure (14) étant montée de manière amovible sur ladite base (12) et ayant une ou plusieurs rainures (22) destinées à recevoir chacune desdites compules dentaires (25), ladite section supérieure ayant fonction de dissipateur de chaleur pour chacune desdites compules (25) et étant apte à maintenir lesdites compules à une température relativement uniforme sur une période de temps étendue,
ladite base (12) comprenant un thermostat (16), un raccord d'alimentation (17) permettant la connexion électrique du thermostat à une source d'alimentation électrique, un élément chauffant (20) permettant de chauffer uniformément la base (12) et un matériau conducteur (21) engagé avec ledit élément chauffant (20) ayant une surface essentiellement plane sur laquelle repose ladite section supérieure amovible (14) pour que la température de la section supérieure (14) lorsqu'elle y est montée, s'élève à une température élevée fonction dudit thermostat (16) et pour chauffer uniformément chaque compule (25) dans chacune desdites rainures (22) et, à son tour, le matériau dentaire de chaque compule (25) respectivement à ladite température élevée.

6. Ensemble de chauffage selon la revendication 5, dans lequel ledit élément chauffant (20) présent dans ladite base a la forme d'un fil filamentaire ou d'un conducteur plat connecté au thermostat (16) pour former un dispositif chauffant électrique résistif.

7. Ensemble de chauffage selon l'une quelconque des revendications 5 ou 6, dans lequel ladite section supérieure (14) se compose d'un matériau choisi dans la classe constituée par l'aluminium, le cuivre, le laiton et l'acier inoxydable.

8. Ensemble de chauffage selon l'une quelconque des revendications 5 à 7, comprenant en outre un élément isolant (28) entourant ladite section supérieure (14) qui permet à ladite section supérieure (14) d'être retirée de ladite base (12), y compris à ladite température élevée, de telle sorte que lesdites compules (25) puissent être transposées, lorsque cela est nécessaire, dans un plateau dentaire à ladite température élevée.

9. Ensemble de chauffage selon l'une quelconque des revendications 5 à 8, dans lequel chacune desdites compules (25) est incorporée dans un dispositif de distribution sous forme d'unité individuelle devant être chauffée par ledit ensemble de chauffage.

10. Ensemble de chauffage selon la revendication 9, dans lequel ledit dispositif de distribution est un distributeur à seringue (31) de matériau dentaire.
